Europäisches Patentamt

**European Patent Office**

**Office européen des brevets**

(19)

(11) Numéro de publication: **0 239 463**
**B1**

(12) # FASCICULE DE BREVET EUROPEEN

(45) Date de publication du fascicule du brevet:
**16.08.90**

(51) Int. Cl.⁵: **B60R 16/02**

(21) Numéro de dépôt: **87400540.8**

(22) Date de dépôt: **11.03.87**

(54) **Dispositif d'alimentation électrique d'une unité centrale par au moins un signal de commande, laquelle unité est reliée à au moins une station locale réceptrice.**

(30) Priorité: **24.03.86 FR 8604192**

(43) Date de publication de la demande:
**30.09.87 Bulletin 87/40**

(45) Mention de la délivrance du brevet:
**16.08.90 Bulletin 90/33**

(84) Etats contractants désignés:
**DE GB IT**

(56) Documents cités:
**FR-A- 2 445 769**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**
Titulaire: **REGIE NATIONALE DES USINES RENAULT, Boîte postale 103 8-10 avenue Emile Zola, F-92109 Boulogne-Billancourt(FR)**

(72) Inventeur: **Clique, Jean-Michel, 125, résidence Elysée II, F-78170 La Celle Saint Cloud(FR)**

(74) Mandataire: **Durand, Yves Armand Louis et al, Cabinet Z. Weinstein 20, Avenue de Friedland, F-75008 Paris(FR)**

## Description

La présente invention a pour objet un dispositif d'alimentation en énergie électrique d'un système notamment à bord d'un véhicule automobile, du type décrit dans le préambule de la revendication principale.

Un tel dispositif est connu par l'antériorité FR-A-2 445 769. Ce dispositif connu présente cependant l'inconvénient majeur que certains circuits à la fois de l'unité centrale et de chaque station locale sont constamment reliés à la batterie par l'intermédiaire de fils de puissance, même quand le système est à l'état de veille, ce qui occasionne une décharge importante de la batterie lors d'un arrêt prolongé du véhicule.

La présente invention a pour but de remédier à cet inconvénient du dispositif connu en proposant un dispositif d'alimentation électrique à un niveau de consommation pratiquement négligeable à l'état de veille du système.

Pour atteindre ce but, le dispositif selon l'invention présente les caractéristiques qui sont énoncées dans la partie caractérisante de la revendication principale.

Grâce à ces caractéristiques de l'invention, l'unité centrale et chacune des stations locales sont complètement isolées électriquement de la source d'énergie à l'état de veille du système. Ce n'est que le dispositif de détection d'une demande de mise en service des stations locales qui est de façon permanente relié à la source et alimenté en énergie. Cependant, la consommation en énergie de ce dispositif est très faible, sinon négligeable.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

La figure 1 est une représentation générale schématique du système selon la présente invention ;

La figure 2 représente un schéma simplifié du dispositif d'alimentation selon un premier mode de réalisation.

La figure 3 est un schéma détaillé du dispositif selon la présente invention pour une seule station locale, selon le premier mode de réalisation.

La figure 4 est un schéma détaillé du dispositif selon un deuxième mode de réalisation.

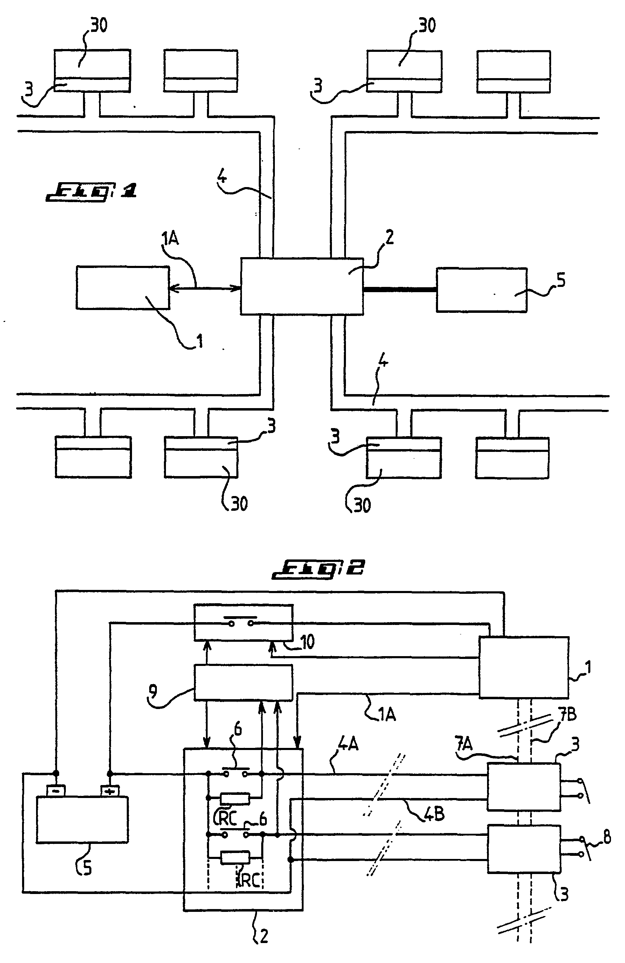

En se référant à la figure 1, le chiffre de référence 3 désigne diverses stations locales auxquelles sont associés respectivement un organe électrique 30 qui peut être, par exemple l'organe électrique de commande du lève-vitre.

Chaque station locale 3 est reliée, au moyen d'un bus de puissance 4 à une source d'alimentation telle qu'une batterie, désignée en 5, par l'intermédiaire d'un organe de sectionnement et de protection 2 qui sera décrit ultérieurement plus en détail.

Une unité centrale 1 est reliée également à l'organe de sectionnement et de protection par une connexion 1A.

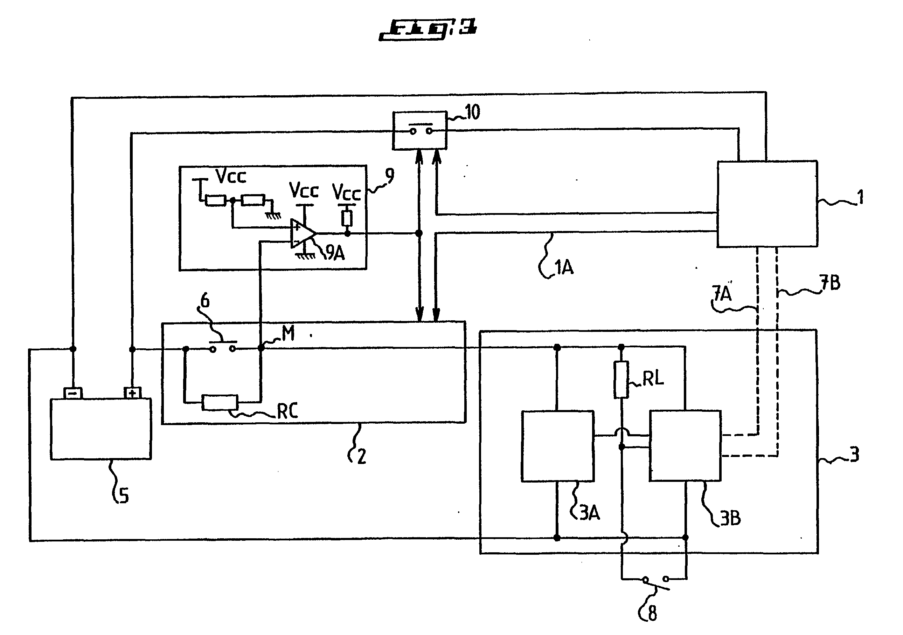

Conformément à la figure 2, chaque station locale 3 reçoit quatre connexions :
- deux fils de puissance 4A, 4B constituant le bus de puissance 4, un des deux fils 4A étant relié au pôle positif de la batterie 5 par l'intermédiaire d'un contact de relais 6, et l'autre fil 4B étant connecté au pôle négatif de la batterie 5 ;
- deux fils de données 7A, 7B établissant la liaison entre l'unité centrale 1 et chaque station locale 3.

En parallèle de chaque contact de relais 6 est montée une première résistance RC, ou un groupe de résistances en série, cet agencement constituant en partie l'organe de sectionnement et de protection 2 ci-dessus mentionné.

Dans le premier mode de réalisation représenté à la figure 2, les sorties de l'organe de sectionnement et de protection 2 sont reliées à un moyen de détection du niveau de potentiel 9. La sortie du moyen de détection 9 est connectée à une entrée de l'organe de sectionnement et de protection 2 et également à un relais, non représenté sur la figure, associé au contact 10. Ce contact est monté entre la source d'alimentation 5 et l'unité centrale 1. De plus, l'unité centrale 1 est reliée audit premier contact de relais 10.

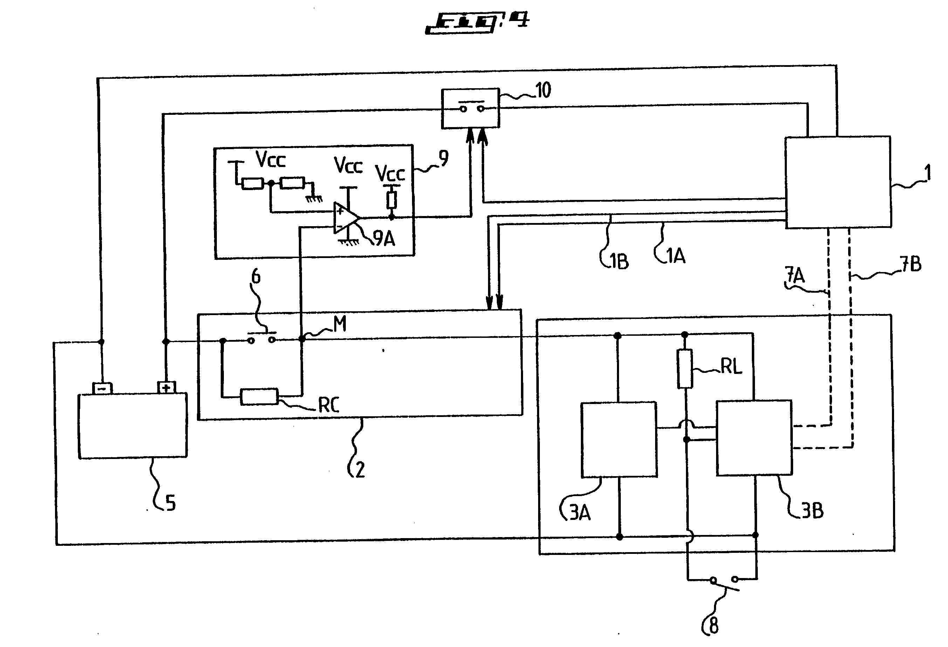

Chaque station locale 3 est munie d'un élément de commutation 8. En se référant plus précisément à la figure 3, chaque station locale comprend un étage de puissance 3A relié entre le pôle négatif de la source d'alimentation 5 et une sortie de l'organe de sectionnement et de protection 2, et une unité de traitement 3B branchée en parallèle aux bornes de l'étage de puissance 3A. Une seconde résistance RL est montée entre la première résistance RC et l'élément de commutation 8. L'association de la première résistance RC et de cette seconde résistance RL constitue un circuit diviseur de tension de point diviseur M.

Au point diviseur M est connecté le moyen de détection du niveau de potentiel 9 qui peut être un comparateur, par exemple un amplificateur opérationnel 9A ou tout autre système équivalent.

La liaison entre l'unité centrale 1 et chaque station locale 3 ou plus précisément chaque unité de traitement 3B de chaque station locale est réalisée au moyen d'un bus de données multiplexées 7A, 7B.

L'unité centrale 1 est également connectée à une entrée de l'organe de sectionnement et de protection 2 par une liaison 1A.

La figure 4 est sensiblement équivalente à la figure 3. Seules diffèrent les liaisons en l'organe de sectionnement et de protection 2 avec l'unité centrale 1 et avec le moyen de détection de potentiel 9. En effet, conformément à la figure 4, il existe une double connexion 1A, 1B entre des sorties de l'unité centrale et des entrées de l'organe de sectionnement et de protection 2. Par contre, la connexion reliant la sortie du moyen de détection 9 et une entrée de l'organe 2 précité n'existe plus.

Selon une variante du dispositif, le premier contact relais 10 relié entre la batterie 5 et l'unité centrale 1 peut également se trouver dans l'organe de sectionnement et de protection 2.

De plus, le moyen de détection du niveau de potentiel 9, peut se trouver indifféremment au sein de l'unité centrale 1 ou de l'organe de sectionnement et de protection 2.

Le fonctionnement du système sera décrit en se référant tout d'abord à la figure 3 : à l'état de repos du véhicule automobile les contacts de relais 6, 10 reliant respectivement la source d'alimentation 5 à au moins une station locale et la source d'alimentation 5 à l'unité centrale, ainsi que l'élément de commutation 8 de chaque station locale sont ouverts. Ainsi, l'unité centrale 1 et toutes les stations locales 3 sont déconnectées de la source d'alimentation et par conséquent ne sont pas alimentées. Seul le moyen de détection du niveau de potentiel reste alimenté mais ne consommant que très peu de puissance n'influe pas de façon importante sur la décharge de la batterie.

Au repos, puisque le contact du relais 6 est ouvert, le point diviseur M est quasiment au potentiel de la batterie 5, les résistances RC limitant et contrôlant le courant de fuite.

Lorsque l'utilisateur de l'automobile sollicite une fonction, telle que par exemple le déverrouillage des portes ou l'alarme anti-vol etc..., l'élément de commutation 8 se ferme, établissant ainsi la liaison de la station locale associée avec la source d'alimentation 5. Ainsi, le niveau du potentiel au point M baisse. Le détecteur du niveau de potentiel relié au point diviseur compare le niveau du potentiel du point M avec un niveau de potentiel de référence, prédéterminé généralement en fonction des valeurs des première et seconde résistances RC et RL. Une fois la baisse de niveau de potentiel au point M décelée, le comparateur émet alors un signal logique de commande pour commander la fermeture des contacts de relais 6 et la fermeture du contact de relais 10 associé à l'unité centrale.

Dès lors, les contacts viennent court-circuiter les premières résistances RC et établissent la distribution de puissance dans chacune des stations locales et l'unité centrale, mettant le dispositif par conséquent en état de fonctionnement : le système électronique embarqué de l'automobile a été réveillé.

Dans un tel dispositif, l'unité centrale a pour fonction de gérer l'ensemble des stations locales et communique avec chacune des stations au moyen d'un bus de données multiplexées. Chaque station locale est alors suceptible de reconnaître les informations dont elle a besoin grâce à un adressage qui lui est propre.

Le mode de réalisation de la figure 4 représente un dispositif qui fonctionne sensiblement de la même façon que le dispositif représenté à la figure 3 : la différence réside dans le fait que la commande de la fermeture des second contacts relais 6 se fait par l'unité centrale 1 au lieu de se faire directement par le moyen détecteur de potentiel. En définitive, le dispositif selon la figure 4 fonctionne de la façon suivante : lors de la sollicitation d'une fonction par l'utilisateur le commutateur 8 se ferme, le moyen détecteur 9 du niveau de potentiel détecte la baisse de potentiel au point M et émet en conséquence, un signal de commande de fermeture du premier contact du relais 10 d'alimentation de l'unité centrale 1. Ensuite, l'unité centrale émet un signal de commande de la fermeture des deuxièmes contacts de relais 6.

Dans les deux cas des figures ci-dessus décrites, la désalimentation des circuits se fait de la façon suivante : lorsque le véhicule retourne à l'état de repos, l'unité centrale 1, après une temporisation prédéterminée, émet un signal de commande de l'ouverture des deuxièmes contacts de relais. Une fois ces contacts ouverts, l'unité centrale 1 envoit un signal de commande de l'ouverture du premier contact de relais 10, de façon à couper sa propre alimentation. Tout le dispositif, excepté le moyen détecteur du niveau de potentiel 5, est alors hors tension ou en état de repos.

Dans les modes de réalisation ci-dessus décrits, le circuit diviseur de tension comporte une première et seconde résistances respectivement RC et RL dont le rapport de la valeur de la première résistance à la seconde résistance est élevé et de préférence d'environ 100. Dans ce cas précis, on peut prendre la résistance RL à une valeur de 100 ohms tandis que la résistance RC a une valeur de 10 kiloohms.

La tension Vcc du comparateur peut être fournie au moyen d'une diode Zener. Cette tension pourrait également être la tension batterie (moyennant une protection contre les surtensions), le dispositif électronique de détection ne nécessitant pas une tension fixe et régulée.

Un dispositif d'alimentation électrique selon la présente invention permet la remise en route de tout le système électronique du véhicule uniquement par la surveillance du niveau de potentiel au point diviseur M de chaque bus de puissance. Il permet de plus, la connexion et la déconnexion sélective des différents organes du système.

Il est à noter que ce dispositif d'alimentation électrique adapté à tout système de multiplexage dans un véhicule peut également s'appliquer à une installation électrique non multiplexée.

En conclusion, le dispositif selon la présente invention résoud le problème de la limitation de consommation de l'électronique embarquée dans un véhicule lorsque celui-ci est à l'état de repos tout en autorisant le fonctionnement immédiat de chacune des fonctions dès la sollicitation de l'une d'entre elles.

## Revendications

1. Dispositif d'alimentation en énergie électrique d'un système notamment à bord d'un véhicule automobile, comprenant une unité centrale (1) et une pluralité de stations locales (3) chacune reliée à l'unité centrale par des fils de transmission de données (7A, 7B), l'unité centrale et chaque station locale étant reliées à une source d'énergie telle que la batterie du véhicule, par un fil de puissance (4A, 4B), caractérisé en ce que dans le fil de puissance reliant l'unité centrale à la source d'alimentation (5) et dans chaque fil (4A) de puissance reliant une station locale (3) à ladite source (5) est disposé un contact interrupteur (6), qu'un circuit diviseur de tension (RC, RL) est associé à chaque station locale (3), dans lequel est disposé un élément de commutation (8) pour la mise en service de la station et qui comprend un point diviseur (M) dont le niveau de potentiel électrique est différent selon l'état de l'élément de commutation (8), et en ce qu'il comprend un dispositif de détection (9) du niveau de potentiel des points diviseurs (M) des circuits diviseurs associés aux stations locales (3), qui est adapté pour produire un signal de commande lorsqu'un élément de commutation (8) a été actionné en vue d'une mise en service d'une station (3) et des moyens de fermeture des contacts interrupteurs (10, 6) situés dans les fils de puissance de l'unité centrale (1) et au moins de la station locale dont l'élément de commutation (8) a été actionné.

2. Dispositif d'alimentation selon la revendication 1, caractérisé en ce que chaque station locale (3) comprend une unité de traitement (3B) reliée entre le point diviseur (M) et la source d'alimentation (5) et pouvant être alimentée dès l'émission du signal de commande précité.

3. Dispositif d'alimentation électrique selon l'une quelconque des revendications précédentes, caractérisé en ce que le signal de commande produit par le moyen de détection (9) agit sur le contact d'un premier relais (10) situé entre la source d'alimentation (5) et l'unité centrale (1).

4. Dispositif d'alimentation électrique selon l'une quelconque des revendications précédentes, caractérisé en ce que le signal de commande produit par le moyen de détection (9) agit également sur le contact d'un deuxième relais (6) associé à au moins une station locale (3) et disposé en parallèle à une première résistance (RC) du circuit diviseur précité, reliant le pôle positif de la source d'alimentation (5) au point diviseur (M).

5. Dispositif d'alimentation électrique selon l'une des revendications 1 à 3, caractérisé en ce que, après réception du signal de commande produit par le moyen de détection (9), l'unité centrale (1) produit un signal de commande de la fermeture d'au moins un deuxième contact de relais (6) associé à au moins une station locale (3) et disposé en parallèle à la résistance (RC) du circuit diviseur précité, reliant le pôle positif de la source d'alimentation (5) au point diviseur (M).

6. Dispositif d'alimentation électrique selon l'une quelconque des revendications précédentes, caractérisé en ce que la seconde résistance (RL) du circuit diviseur de tension est reliée au pôle négatif de la source d'alimentation (5) par l'intermédiaire d'un élément de commutation (8).

7. Dispositif d'alimentation électrique selon la revendication 6, caractérisé en ce que la seconde résistance (RL) précitée est située dans la station locale (3).

8. Dispositif d'alimentation électrique selon l'une quelconque des revendications précédentes, caractérisé en ce que l'unité centrale (1) est reliée à au moins une station locale (3) au moyen d'un bus de données multiplexées (7A, 7B).

9. Dispositif d'alimentation électrique selon l'une quelconque des revendications précédentes, caractérisé en ce que le moyen de détection de potentiel (9) est un comparateur comparant le potentiel au point diviseur (M) précité à un potentiel de référence.

10. Dispositif d'alimentation électrique selon l'une des revendications 1 à 4 ou 6 à 9, caractérisé en ce que les premier et second relais précités (10 ; 6) sont commandés par le signal de commande produit par le moyen de détection (9).

11. Dispositif d'alimentation électrique selon l'une des revendications 1 à 3 et 5 à 9, caractérisé en ce que le premier relais (10) est commandé par le signal de commande produit par le moyen de détection (9) et les second relais (6) sont commandés par le signal de commande produit par l'unité centrale (1).

12. Dispositif selon l'une quelconque des revendications précédentes, caractérisé en ce que la position ouverte de l'élément de commutation (8) précité correspond à l'état de repos du dispositif à l'exception du moyen de détection (9) qui est alimenté en permanence.

13. Dispositif d'alimentation électrique selon l'une quelconque des revendications précédentes, caractérisé en ce que le rapport de la première résistance (RC) à la seconde résistance (RL) est élevé, et de préférence d'environ 100.

14. Dispositif d'alimentation électrique selon l'une quelconque des revendications précédentes, caractérisé en ce que, pour mettre le dispositif à l'état de repos, l'unité centrale (1) émet un signal de commande de l'ouverture du premier contact relais (10) et des second contacts relais (6).

**Claims**

1. Device for the supply with electric energy of a system in particular on board an automotive vehicle, comprising a central unit (1) and a plurality of local stations (3) each one connected to the central unit by data transmission wire leads (7A, 7B), the central unit in each local station being connected to a source of energy such as the storage battery of the vehicle by a power wire lead (4A, 4B), characterized in that in the power wire lead connecting the central unit to the supply source (5) and in each power wire lead (4A) connecting a local station (3) to the said source (5) is disposed a cut-off contact (6), and that a voltage divider circuit (RC, RL) is associated with each local station (3) in which is disposed a switching element (8) for putting the station into operation and which comprises a dividing point (M) the electric potential level of which is different according to the state of the switching element (8) and in that it comprises a device (9) for the detection of the potential level of the dividing points (M) of the divider circuits associated with the local stations (3), which is adapted to produce a control signal when a switching element (8) has been actuated with a view to put a station (3) into operation and a means for closing the cut-off contacts (10, 6) located in the power wire leads of the central unit (1) and at least of that local station the switching element (8) of which has been actuated.

2. Supply device according to claim 1, characterized in that each local station (3) comprises a processing unit (3B) connected between the dividing point (M) and the supply source (5) and which may be fed as soon as the aforesaid control signal has been emitted.

3. Electrical supply device according to any one of the foregoing claims, characterized in that the control signal produced by the detecting means (9) acts upon the contact of a first relay (10) located between the supply source (5) and the central unit (1).

4. Electrical supply device according to any one of the preceding claims, characterized in that the control signal produced by the detection means (9) also acts upon the contact of a second relay (6) associated with at least one local station (3) and disposed in parallel relationship with a first resistor (RC) of the aforesaid divider circuit connecting the positive pole of the supply source (5) to the dividing point (M).

5. Electric supply device according to one of claims 1 to 3, characterized in that after receipt of the control signal produced by the detection means (9) the central unit (1) produces a signal for the control of the closing of at least a second relay contact (6) associated with at least one local station (3) and disposed in parallel relationship with the resistor (RC) of the aforesaid divider circuit connecting the positive pole of the supply source (5) to the dividing point (M).

6. Electrical supply device according to any one of the preceding claims, characterized in that the second resistor (RL) of the voltage divider circuit is connected to the negative pole of the supply source (5) through the medium of a switching element (8).

7. Electrical supply device according to claim 6, characterized in that the aforesaid second resistor (RL) is located within the local station (3).

8. Electrical supply device according to any one of the foregoing claims, characterized in that the central unit (1) is connected to at least one local station (3) by means of a multiplexed data bus (7A, 7B).

9. Electrical supply device according to any one of the preceding claims, characterized in that the potential detection means (9) is a comparator comparing the potential at the aforesaid dividing point (M) with a reference potential.

10. Electrical supply device according to one of claims 1 to 4 or 6 to 8, characterized in that the aforesaid first and second relays (10; 6) are operated by the control signal produced by the detection means (9).

11. Electrical supply device according to one of claims 1 to 3 and 5 to 9, characterized in that the first relay (10) is operated by the control signal produced by the detection means (9) and the second relays (6) are operated by the control signal produced by the central unit (1).

12. Device according to any one of the preceding claims, characterized in that the open position of the aforesaid switching element (8) corresponds to the rest condition of the device except for the detection means (9) which is permanently fed.

13. Electrical supply device according to any one of the foregoing claims, characterized in that the ratio of the first resistor (RC) to the second resistor (RL) is high and preferably about 100.

14. Electrical supply device according to any one of the foregoing claims, characterized in that for putting the device in a state of rest the central unit (1) emits a signal for the control of the opening of the first relay contact (10) and of the second relay contacts (6).

**Patentansprüche**

1. Vorrichtung zur Speisung mit elektrischer Energie eines Systems insbesondere an Bord eines Kraftfahrzeugs, mit einer Zentraleinheit (1) und einer Vielzahl von jeweils an die Zentraleinheit über Datenübertragungsleiterdrähte (7A, 7B) angeschlossenen örtlichen Stationen (3), wobei die Zentraleinheit und jede örtliche Station über ein Leistungsleiterdraht (4A, 4B) mit einer Energiequelle wie dem Stromsammler des Fahrzeugs verbunden ist, dadurch gekennzeichnet, dass in dem die Zentraleinheit mit der Versorgungsquelle (5) verbindende Leistungsleiterdraht und in jedem eine örtliche Station (3) mit der besagten Quelle (5) verbindenden Leistungsleiterdraht (4A) ein Unterbrecherkontakt (6) angeordnet ist, dass ein Spannungsteilerkreis (RC, RL) jeder örtlichen Station (3) zugeordnet ist, in welchem ein Schaltelement (8) für das Inbetriebsetzen der Station angeordnet ist und welcher einen Teilerpunkt (M) umfasst, dessen elektrischer Potentialpegel je nach dem Zustand des Schaltelements (8) verschieden ist, und dass sie eine Vorrichtung (9) zur Erfassung des Potentialpegels der Teilerpunkte (M) der den örtlichen Stationen (3) zugeordneten Teilerschaltkreise umfasst, welche angepasst ist, um ein Steuersignal zu erzeugen, wenn ein Schaltelement (8) zum Inbetriebsetzen einer Station (3) betätigt worden ist, sowie Mittel zum Schliessen der in den Leistungsleiterdrähten der Zentraleinheit (1) und wenigstens derjenigen örtlichen Station, dessen Schaltelement (8) betätigt worden ist, liegenden Unterbrecherkontakte (10; 6).

2. Speisevorrichtung nach Anspruch 1, dadurch gekennzeichnet, dass jede örtliche Station (3) eine zwischen dem Teilerpunkt (M) und der Versorgungsquelle (5) geschaltete Bearbeitungseinheit (3B) aufweist, welche gespeist werden kann, sobald das vorgenannte Steuersignal ausgesandt worden ist.

3. Elektrische Speisevorrichtung nach irgendeinem der vorangehenden Ansprüche, dadurch gekennzeichnet, dass das durch das Erfassungsmittel (9) erzeugte Steuersignal auf den Kontakt eines ersten zwischen der Versorgungsquelle (5) und der Zentraleinheit (1) gelegenen ersten Relais (10) einwirkt.

4. Elektrische Speisevorrichtung nach irgendeinem der vorangehenden Ansprüche, dadurch gekennzeichnet, dass das durch das Erfassungsmittel (9) erzeugte Steuersignal auch auf den Kontakt eines wenigstens einer örtlichen Station (3) zugeordneten und mit einem ersten, den positiven Pol der Versorgungsquelle (5) mit dem Teilerpunkt (M) verbindenden Widerstand (RC) des vorgenannten Teilerschaltungskreises parallel geschalteten zweiten Relais (6) einwirkt.

5. Elektrische Speisevorrichtung nach irgendeinem der Ansprüche 1 bis 3, dadurch gekennzeichnet, dass nach Empfang des durch das Erfassungsmittel (9) erzeugten Steuersignals, die Zentraleinheit (1) ein Steuersignal zum Schliessen von wenigstens eines zweiten, wenigstens einer örtlichen Station (3) zugeordneten und mit dem, den positiven Pol der Versorgungsquelle (5) mit den Teilerpunkt (M) verbindenden Widerstand (RC) des vorgenannten Teilerschaltungskreises parallel geschalteten zweiten Relaiskontaktes (6) erzeugt.

6. Elektrische Speisevorrichtung nach irgendeinem der vorangehenden Ansprüche, dadurch gekennzeichnet, dass der zweite Widerstand (RL) des Spannungsteilerschaltungskreises über ein Schaltelement (8) an den negativen Pol der Versorgungsquelle (5) angeschlossen ist.

7. Elektrische Speisevorrichtung nach Anspruch 6, dadurch gekennzeichnet, dass der vorgenannte zweite Widerstand (RL) in der örtlichen Station (3) gelegen ist.

8. Elektrische Speisevorrichtung nach irgendeinem der vorangehenden Ansprüche, dadurch gekennzeichnet, dass die Zentraleinheit (1) mit wenigstens einer örtlichen Station (3) mittels einer Sammelleitung (7A, 7B) für gebündelte Daten verbunden ist.

9. Elektrische Speisevorrichtung nach irgendeinem der vorangehenden Ansprüche, dadurch gekennzeichnet, dass das Potentialerfassungsmittel (9) ein den Potential am vorgenannten Teilerpunkt (M) mit einem Bezugspotential vergleichender Vergleicher ist.

10. Elektrische Speisevorrichtung nach einem der Ansprüche 1 bis 4 oder 6 bis 9, dadurch gekennzeichnet, dass das vorgenannte erste und zweite Relais (10 ; 6) durch das durch das Erfassungsmittel (9) erzeugte, Steuersignal, betätigt werden.

11. Elektrische Speisevorrichtung nach einem der Ansprüche 1 bis 3 und 5 bis 9, dadurch gekennzeichnet, dass das erste Relais (10) durch das, durch das Erfassungsmittel (9) erzeugte, Steuersignal betätigt wird und die zweiten Relais (6) durch das, durch die Zentraleinheit (1) erzeugte, Steuersignal betätigt werden.

12. Vorrichtung nach irgendeinem der vorangehenden Ansprüche, dadurch gekennzeichnet, dass die geöffnete Stellung des vorgenannten Schaltelements (8) dem Ruhezustand der Vorrichtung entspricht, mit Ausnahme des Erfassungsmittels (9), welches dauernd gespeist wird.

13. Elektrische Speisevorrichtung nach irgendeinem der vorangehenden Ansprüche, dadurch gekennzeichnet, dass das Verhältnis des ersten Widerstandes (RC) zum zweiten Widerstand (RL) hoch ist und vorzugsweise ungefähr 100 beträgt.

14. Elektrische Speisevorrichtung nach irgendeinem der vorangehenden Ansprüche, dadurch gekennzeichnet, dass, um die Vorrichtung in den Ruhezustand zu versetzen, die Zentraleinheit (1) ein Steuersignal zum Öffnen des ersten Relaiskontaktes (10) und der zweiten Relaiskontakte (6) aussendet.

Fig. 1

Fig. 2

Fig.3

EP 0 239 463 B1

Fig.4

EP 0 239 463 B1